# EUROPEAN PATENT APPLICATION

(11) **EP 4 752 339 A1**
(43) Date of publication of application: **03.06.2026**
(21) Application number: 24216724.5
(22) Date of filing: 02.12.2024
(51) Int. Cl.: F01N 3/10, F01N 3/20, F01N 3/28

(54) **DEPOLLUTION DEVICE AND VEHICLE COMPRISING SAID DEPOLLUTION DEVICE**

(71) Applicant: Horse Powertrain Solutions, S.L.U., 28108 Alcobendas (Madrid) (ES)
(72) Inventor: GOURARA, Amine, 91510 LARDY (FR)
(74) Representative: Elzaburu S.L.P.

(57) **Abstract**

The present invention relates to a depollution device and vehicle comprising said depollution device, wherein the depollution device is characterized by further comprising, from upstream to downstream in the direction of the exhaust gases: a diesel oxidation catalyst (DOC) configured to oxidise the residual hydrogen and treat engine oil combustion products present in the combustion gas exhaust inlet, providing a NOx-laden exhaust gas; and at least one mixer configured to mix the NOx-laden exhaust gases with a urea-based solution supplied via a urea tank, providing a mixture between the NOx-laden exhaust gas and the urea-based solution, followed by a selective nitrogen oxide reduction catalyst (SCR) configured to treat NOx present in the mixture coming from the mixer.

## Description

### FIELD OF THE INVENTION

The present invention relates to a post-treatment system for pollutant emissions from a hydrogen combustion engine.

### BACKGROUND OF THE INVENTION

The global transition to a low-carbon economy has begun, mainly supported by the Paris Climate Agreement. Transportation will have to play an important role in this transition. The transition to a low-carbon economy also represents a major opportunity for jobs and growth in the transport sector, as low-emission mobility markets grow globally. This transition will be supported by a series of disruptive trends, such as digitalization and new technologies. Transportation is increasingly becoming an on-demand service as consumer needs and perceptions of mobility solutions evolve.

In this sense, adapting hydrogen-powered vehicle from vehicles comprising internal combustion engines offers a clear advantage in terms of low-carbon mobility. It also meets the operational need to ensure the continuity of transport services for goods and people in urban areas subject to the "ICE ban" (ban on using an internal combustion engine powered by a carbon-based fuel such as petrol or diesel).

Internal combustion engines running on hydrogen are of the "spark-ignition" type. However, unlike conventional spark-ignition engines (running on petrol, LPG or CNG gas, alcohol, etc.) which operate at most operating points at richness 1, operating on hydrogen, without carbon, generally involves high emissions of nitrogen oxides (NOx) in principle, if the mixture is maintained at stoichiometry.

Controlling nitrogen oxide emissions from the engine ("engine out") involves operating the combustion system at dilutions λ well in excess of 1 (i.e. at richnesses R less than 1, in other words with a lean mixture). This dilution makes it possible to significantly lower the engine's exhaust temperatures (for example 100°C to 200°C lower than a conventional diesel engine), which helps to reduce the production of nitrogen oxides.

Recall that the richness R is defined as the ratio between the fuel flow rate (by mass) and the air flow rate (by mass), divided by the ratio between the fuel flow rate (by mass) and the air flow rate (by mass) in stoichiometric proportions; the dilution λ corresponds to the inverse of the richness.

More specifically, in stationary conditions (constant or more or less constant engine speed and torque/load), a dilution of around 2.5 appears to be a good compromise between high performance and low emissions.

Cleaning up the nitrogen oxides still present in the engine's combustion gases and treating the hydrogen that did not participate in the combustion process must be performed to avoid undesired emission.

CN217152080 describes a hydrogen engine exhaust after-treatment system which comprises an exhaust catalytic device and a hydrogen supply device. The exhaust catalytic device is used for converting hydrocarbon (HC), carbon monoxide (CO) and nitrogen oxide (NOx) in exhaust, and the hydrogen supply device is used for supplying hydrogen into the exhaust catalytic device. According to this document, the exhaust catalytic device comprises a three-way catalyst (3WC), a first heat dissipation exhaust pipe, a heat dissipation silencer, a second heat dissipation exhaust pipe and an H2-DeNOx catalyst which are sequentially connected. An inlet of the three-way catalyst is connected with an outlet of an exhaust pipe of the hydrogen engine, and the H2-DeNOx catalyst is installed at the position away from the outlet of the exhaust pipe of the hydrogen engine, and an outlet of the H2-DeNOx catalyst is directly communicated with the atmosphere. The emission of hydrocarbon (HC), carbon monoxide (CO) and nitrogen oxide (NOX) in engine exhaust can be reduced to a near-zero level, namely less than 10ppm.

The specific technical constraints of the hydrogen engine that the pollution control system must meet are as follows:
- In steady-state operation, high dilution implies a high exhaust gas flow rate and requires the engine to be heavily supercharged. The high flow rate greatly reduces the contact time between the NOx and the depollution catalysts.
- On the other hand, during load transients (acceleration), it is necessary to reduce the dilution (which then approaches 1) in order to quickly deliver the target torque, which results in a very rapid increase (in a few seconds) in NOx emissions.

In addition, it should be noted that if the fuel contains no carbon, hydrocarbon combustion of a small fraction of the lubricating oil still takes place in the engine combustion chambers. In fact, it is known per se that the lubrication of engine parts (crankcase barrels, pistons, etc.) is provided by oil containing carbon compounds, a reserve of which is contained in a lower crankcase of the engine. Part of the film of oil lining the walls of the drums then participates in the combustion process, which creates both residues (although not of the "soot" type as in a diesel engine) and micro-particles (similar to those produced by petrol combustion).

It is the general aim of the invention to propose a pollution control device that makes this possible, providing a safer alternative compared to the solutions described in the state-of-the-art.

### SUMMARY OF THE INVENTION

The present invention refers to a post-treatment system for pollutant emissions from a hydrogen combustion engine.

In a first aspect, the invention refers to a depollution device comprising a combustion gas exhaust inlet connectable with an outlet of an exhaust gas circuit of a hydrogen combustion engine of a vehicle.

In contrast with the state-of-art, the depollution device comprises, from upstream to downstream in the direction of the exhaust gases:
- a two-way catalyst (2WC) configured to oxidise the residual hydrogen and treat engine oil combustion products present in the combustion gas exhaust inlet, providing a NOx-laden exhaust gas; and
- at least one mixer configured to mix the NOx-laden exhaust gases with a urea-based solution supplied via a urea tank, providing a mixture between the NOx-laden exhaust gas and the urea-based solution, followed by a selective nitrogen oxide reduction catalyst (SCR) configured to treat NOx present in the mixture coming from the mixer.

In other aspect, the invention refers to a motor vehicle comprising the depollution device according to the present invention. The vehicle comprises a hydrogen combustion engine comprising a combustion chamber connected to an air intake circuit and a combustion gas exhaust circuit. Particularly, the depollution device is attached to the outlet of the combustion gas exhaust circuit of the hydrogen combustion engine.

In contrast with other previous solution, the depollution device comprising a combined use of catalyst as described avoids the risk of clogging linked to soot without introducing additional safety risk, like injecting hydrogen in the exhaust line.

In other words, the present invention provides a safer depollution device, meeting a target emission, attachable to a hydrogen combustion engine, that may be comprises in a motor vehicle like automotive passenger car, light commercial vehicle, heavy duty vehicle, off-road (public works) or agricultural applications.

### BRIEF DESCRIPTION OF THE FIGURES

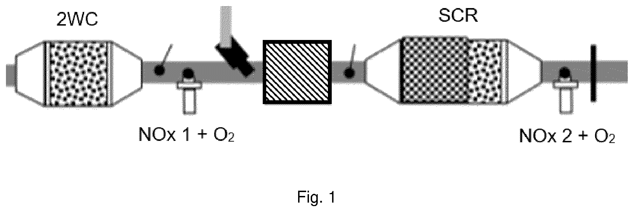

Figure 1 refers to a schematic view of an embodiment of a depollution device according to the present invention.

### DETAILED DESCRIPTION OF THE INVENTION

The invention involves defining an NOx after-treatment system that meets the specific requirements of hydrogen combustion engines.

In a first aspect, the invention refers to a depollution device comprising a combustion gas exhaust inlet connectable with an outlet of an exhaust gas circuit of a hydrogen combustion engine of a vehicle.

In contrast with the state-of-the-art, the depollution device comprises, from upstream to downstream in the direction of the exhaust gases, a two-way catalyst (2WC), that is to say, an oxidation catalyst similar to those used in diesel engines (DOC) which oxidises unburned hydrocarbons and carbon monoxide (CO), and at least one mixer followed by a selective nitrogen oxide reduction catalyst (SCR). The treatment according to the present invention, via a combined use of catalyst, provide a safe solution for the pollutant emission in a vehicle.

The two-way catalyst (2WC) is configured to treat the gas stream provided by the outlet of the exhaust gas circuit of the hydrogen combustion engine.

Specifically, the two-way catalyst (2WC) oxidises the residual hydrogen. In addition, one of the advantages of this catalyst is that the two-way catalyst also treats the products of the engine oil combustion. These oil combustion products are presented in the combustion gas exhaust inlet due to the engine must be lubricated. As result, a NOx-laden exhaust gas is formed.

In one embodiment, the two-way catalyst (2WC) is located immediately at the engine's exhaust. In this way, the oxidation catalyst may reach its priming temperature as quickly as possible, having a given minimum conversion efficiency.

On the other hand, the at least one mixer configured to mix the NOx-laden exhaust gases, formed in the two-way catalyst (2WC), with a urea-based solution (Adblue^{®}). The urea-based solution is supplied via a urea tank. In this sense, a urea injector may be pace in the exhaust line, upstream of the mixer. As result, a mixture between the NOx-laden exhaust gas and the urea-based solution is provided.

Each mixer is followed by a selective nitrogen oxide reduction catalyst (SCR). The selective nitrogen oxide reduction catalyst (SCR) is configured to treat NOx present in the mixture coming from the mixer.

In one embodiment, as the exhaust gases do not contain any residues of the "soot" type which would have to be filtered by a particulate filter similar to those used in diesel engines (DPF), the SCR catalyst may advantageously be of the non-filtering type (i.e. the "flow through" type) instead of having a filtration function (i.e. the "wall through" type). This provides less exhaust back-pressure in the exhaust line of the engine and thus higher performances.

As the only hydrocarbon combustion is the lubricant (in a residual manner), there is a virtual absence of soot particles in the engine's combustion gases. Unlike in the case of diesel engines, this absence eliminates any risk of fouling or clogging of the exhaust line.

In other embodiment, the SCR catalyst may comprise a honeycomb structure. The honeycomb structure may comprise an optimised exchange surface. The exchange surface of the honeycomb structure will advantageously increase the NOx reduction rate to meet the high exhaust flow constraint due to the high dilution. In particular, the exchange surface may comprise between 700 and 1200 cells per square inch (approx. 0.45 and 0.77 cell per square meter). An identical density can also be provided for the 2WC for the same purpose.

In other embodiment, the depollution device further comprises an ammonia oxidation catalyst (CUC). The ammonia oxidation catalyst (CUC) may be provided downstream of the SCR catalyst to reduce the risk of ammonia leaks downstream of the SCR catalyst.

In other embodiment, the depollution device may comprise a gasoline particular filter (GPF). The GPF filter is configured to filter oil combustion residues. Particularly, the residues are in the form of fine particulate matter (PM2.5) and exhaust urea injection residues, like urea crystals. A particulate filter of this type generally enables residues to be eliminated passively, without being caused by the forcing of a specific combustion mode, solely under the action of the high temperature during certain operating conditions.

In other embodiment, the depollution device may comprise an engine control system to control the depollution device. The engine control system comprises an engine control unit (ECU) hosting the urea dosing strategy. In this sense, the engine control unit (ECU), particularly, the urea ECU, may host the urea injection process and management of pressurisation, heating/thawing, gauging, purging at engine stop and associated diagnostics.

In addition, the control system may comprise NOx sensors in the exhaust line. A NOx sensor may be placed upstream (first NOx sensor) and downstream (second NOx sensor) of the SCR and, if appropriate, the ammonia oxidation catalyst. The first NOx sensor should be place after the oxidation catalyst (DOC) to avoid exposure to residual hydrogen molecules from the engine, that affects the reliability of the sensor.

In other embodiment, the depollution device may comprise a first and a second mixer followed by a first and second SCR catalyst, downstream of the two-way catalyst (2WC). This embodiment improves the efficiency of the treatment of NOx, meeting an emission target.

In conclusion, the combined use of catalysts as described in the present invention avoid the risk of clogging linked to soot without introducing additional safety risk, like injecting hydrogen in the exhaust line as described in previous solutions.

In other aspect, the invention refers to a motor vehicle comprising the depollution device according to the present invention. The vehicle comprises a hydrogen combustion engine comprising a combustion chamber connected to an air intake circuit and a combustion gas exhaust circuit. Particularly, the depollution device is attached to the outlet of the combustion gas exhaust circuit of the hydrogen combustion engine.

In one embodiment, the combustion gas exhaust circuit may comprise an exhaust manifold, connected to the combustion chamber, and at least one turbine.

On the other hand, the air intake circuit may comprise at least one compressor for a turbocharger and an intake manifold connected to the combustion chamber. In one embodiment, the compressors may be associated with an intake bypass circuit fitted with a valve, for instance, a pop-off valve.

Additionally, the air intake circuit may comprise additional equipment commonly used, like an air filter and an air flow meter (AFM), situated before the at least one compressor, and an air cooler, like a water changed air cooler, and an air flow control valve situated between the at least compressor and the intake manifold.

The at least one compressor may define a first compressor for a first turbocharger, known as a "low pressure" ("LP") turbocharger, and a second compressor for a second turbocharger, known as a "high pressure" ("HP") turbocharger. In one embodiment, the outlet of the first compressor is split into two parts, allowing the air from the first compressor to pass into the second compressor or not.

The at least one turbine may be mounted on a shaft in common with a compressor. Based on one embodiment comprising a first and a second turbine, the exhaust circuit may define a first turbine of the second high-pressure turbocharger, mounted on a shaft in common with the second compressor, and a second turbine of the first low-pressure turbocharger, mounted on a shaft in common with the first compressor.

In other embodiment, an alternative engine may comprise an electric compressor replacing one of the turbochargers.

In conclusion, the multiple embodiments of the depollution device according to the present invention provide a properly alternative regarding an after-treatment system for pollutant emissions meeting an emissions target. In addition, the present invention avoids the risk of clogging linked to soot without introducing additional safety risk, like injecting hydrogen in the exhaust line as described in previous solution.

## Claims

1. A depollution device comprising a combustion gas exhaust inlet connectable with an outlet of an exhaust gas circuit of a hydrogen combustion engine of a vehicle, wherein the depollution device is **characterized by** further comprising, from upstream to downstream in the direction of the exhaust gases:
- a two-way catalyst (2WC) configured to oxidise the residual hydrogen and treat engine oil combustion products present in the combustion gas exhaust inlet, providing a NOx-laden exhaust gas; and
- at least one mixer configured to mix the NOx-laden exhaust gases with a urea-based solution supplied via a urea tank, providing a mixture between the NOx-laden exhaust gas and the urea-based solution, followed by a selective nitrogen oxide reduction catalyst (SCR) configured to treat NOx present in the mixture coming from the mixer.

2. The depollution device according to claim 1, wherein the selective nitrogen oxide reduction catalyst (SCR) comprises a non-filtering catalyst.

3. The depollution device according to claim 1, wherein the selective nitrogen oxide reduction catalyst (SCR) comprises a honeycomb structure with an exchange surface between 700 and 1200 cells per square inch.

4. The depollution device according to claim 1, wherein the depollution device further comprises an ammonia oxidation catalyst (CUC) placed downstream of the SCR catalyst.

5. The depollution device according to claim 1, wherein the depollution device further comprises a passive gasoline particulate filter (GPF) to filter oil combustion residues and exhaust urea injection residues, situated downstream of the selective nitrogen oxide reduction catalyst (SCR).

6. The depollution device according to claim 1, wherein the depollution device further comprises an engine control system comprising an engine control unit (ECU) hosting the urea dosing strategy.

7. The depollution device according to claim 1, wherein the engine control system comprises first NOx sensor placed after the oxidation catalyst (DOC) and a second NOx placed after the selective nitrogen oxide reduction catalyst (SCR).

8. A vehicle **characterised in that** it comprises a hydrogen combustion engine comprising a combustion chamber connected to an air intake circuit and a combustion gas exhaust circuit, and a depollution device according to any one of claims 1 - 7, wherein the depollution device is connected with the outlet of the combustion gas exhaust circuit of the hydrogen combustion engine.

9. The vehicle according to claim 8, wherein the combustion gas exhaust circuit of the hydrogen combustion engine further comprises an exhaust manifold and at least one turbine

10. The vehicle according to any one of claims 9, wherein the air intake circuit comprises at least one compressor for a turbocharger and an intake manifold connected to the combustion chamber.

11. The vehicle according to any one of claims 10, wherein one compressor and one turbine are mounted on a shaft in common.
